# EUROPÄISCHE PATENTSCHRIFT

(11) **EP 3 284 626 B1**
(45) Veröffentlichungstag und Bekanntmachung des Hinweises auf die Patenterteilung: **19.02.2020**
(21) Anmeldenummer: 17178274.1
(22) Anmeldetag: 28.06.2017
(51) Int. Cl.: B60K 17/344, B60K 23/08

(54) **ANTRIEBSSTRANG**
DRIVE TRAIN
GROUPE MOTOPROPULSEUR

(30) Priorität: 29.07.2016 DE 102016214034
(43) Veröffentlichungstag der Anmeldung: 21.02.2018
(73) Patentinhaber: ZF Friedrichshafen AG, 88046 Friedrichshafen (DE)
(72) Erfinder: Solka, Ulrich, 94081 Fuerstenzell (DE)

(56) Entgegenhaltungen:
- DE-A1- 10 160 951
- DE-A1- 19 611 058
- DE-B3-102014 113 937
- DE-U1-202014 102 413

## Beschreibung

Die Erfindung bezieht sich auf einen Antriebsstrang für ein Allradstraßenfahrzeug mit einer ersten Antriebsstrangkomponente, die ein drehbar gelagertes Abtriebselement aufweist und mit einer zweiten Antriebsstrangkomponente, die ein zum Abtriebselement axiales drehbar gelagertes Antriebselement aufweist, wobei das Abtriebselement durch ein Kopplungselement mit dem Antriebselement drehfest verbunden ist, das Abweichungen von einer Koaxialität der Drehachsen von Abtriebselement und Antriebselement erlaubt, mit einer ersten Verbindung eines ersten Endes des Kopplungselements mit dem Abtriebselement und einer zweiten Verbindung des zweiten Endes des Kopplungselements mit dem Antriebselement.

Bei einem derartigen Antriebsstrang für ein Allradstraßenfahrzeug ist es bekannt als erste Antriebskomponente ein Schaltgetriebe und als zweite Antriebskomponente ein Verteilergetriebe zu verwenden, wobei das Schaltgetriebe und das Verteilergetriebe über eine Gelenkwelle antriebsmäßig verbunden sind. Dabei erstreckt sich die Gelenkwelle von der dem Verteilergetriebe zugewandten Seite des Gehäuses des Schaltgetriebes zu der dem Schaltgetriebe zugewandten Seite des Gehäuses des Verteilergetriebes. Da die Gelenkwelle nicht beliebig kurz ausgeführt werden kann, muss ein bestimmter Mindestabstand zwischen dem Gehäuse des Schaltgetriebes und dem Gehäuse des Verteilergetriebes eingehalten werden insbesondere dann, wenn nicht nur sehr kleine radiale und/oder axiale Auslenkungen zwischen den Gelenken der Gelenkwelle möglich sein sollen. Dies führt zu einem großen erforderlichen Bauraum.

In diesem Zusammenhang beschreibt die DE 196 11 058 A1 eine Kupplungsanordnung für ein Kraftfahrzeug mit einem Eingangsglied, einem Ausgangsglied sowie einer zwischen dem Eingangs- und Ausgangsglied angeordneten Scheibenkupplung und einer ebenfalls zwischen dem Eingangs- und Ausgangsglied angeordneten Konuskupplung. Über auf beide Kupplungen einwirkende Mittel kann die Drehmomentübertragung vom Eingangsglied zum Ausgangsglied moduliert werden. Über eine ebenfalls vorgesehene Sperrkupplung kann das Eingangsglied mit dem Ausgangsglied zudem kraftschlüssig gekuppelt werden.

Aufgabe der Erfindung ist es einen Antriebsstrang der eingangs genannten Art zu schaffen, der bei einem geringen Abstand zwischen der ersten Antriebsstrangkomponente und der zweiten Antriebsstrangkomponente eine große zulässige radiale und/oder axiale Auslenkung zwischen den Enden des Kopplungselements ermöglicht.

Diese Aufgabe wird erfindungsgemäß dadurch gelöst, dass das Abtriebselement eine die zweite Antriebsstrangkomponente ganz oder teilweise durchragende Hohlwelle ist, die in der zweiten Antriebsstrangkomponente drehbar gelagert ist und die mit radialem Spiel von dem Kopplungselement ganz oder teilweise durchragt ist, wobei die erste Verbindung zwischen der ersten Antriebskomponente und der zweiten Antriebskomponente und die zweite Verbindung im Bereich innerhalb der zweiten Antriebsstrangkomponente oder im Bereich außerhalb der zweiten Antriebsstrangkomponente auf deren der ersten Antriebsstrangkomponente abgewandten Seite angeordnet ist.

Unter einem Allradstraßenfahrzeug wird im Sinne der Erfindung jedes Kraftfahrzeug verstanden, welches über einen permanenten oder zuschaltbaren Allradantrieb verfügt. Ein derartiges Kraftfahrzeug ist zur Fortbewegung auf einer Straße geeignet, aber nicht zwangsläufig an eine Fortbewegung ausschließlich auf einer Straße gebunden. Stattdessen kann das Allradstraßenfahrzeug bevorzugt auch geländegängig sein.

Durch den größeren Abstand zwischen der ersten Verbindung und der zweiten Verbindung als dem Abstand zwischen der ersten Antriebsstrangkomponente und der zweiten Antriebsstrangkomponente sind bei gleicher Relativbewegung wie beim Stand der Technik die Winkelauslenkungen des Kopplungselements geringer, so dass bei gleicher Bauart der ersten und zweiten Verbindung größere Relativbewegungen möglich sind. Gleichzeitig muss zwischen der ersten Antriebsstrangkomponente und der zweiten Antriebsstrangkomponente nur ein Abstand vorgehalten werden, der mindestens der Länge der ersten Verbindung entspricht. Es wird also ein kompakter, wenig Bauraum benötigender Aufbau erreicht, ohne die Funktion zu beeinträchtigen. Weiterhin ist der Antriebsstrang leicht montierbar und demontierbar.

Als ein einfaches Standartbauteil kann das Kopplungselement eine Gelenkwelle sein.

Dabei kann die erste Verbindung und/oder die zweite Verbindung als Kardangelenk oder als Gleichlaufgelenk oder als Bogenzahnkupplung oder als Membrankupplung oder als Gummi-Metall-Kupplung ausgebildet sein.

Sind die erste Verbindung und/oder die zweite Verbindung als Gleichlaufgelenk ausgebildet, so können die Laufbahnen des Gleichlaufgelenks in geschützter Weise in der Hohlwelle angeordnet sein.

Die Gleichlaufgelenke haben den Vorteil, dass die Winkelgeschwindigkeiten der An- und Abtriebsseite nicht voneinander abweichen. Somit werden Unregelmäßigkeiten im Antriebsstrang und zusätzliche Belastungen der umgebenden Komponenten vermieden.

Ist vor dem Gelenk der als Gelenkwelle ausgebildeten zweiten Verbindung eine kreuzverzahnte Flanschverbindung angeordnet, so können Achsabweichungen einfach ausgeglichen werden.

Eine leichte Montierbarkeit und schnelle Lösbarkeit des Antriebsstrangs kann dadurch erreicht werden, dass das Kopplungselement zwischen der ersten Verbindung und der zweiten Verbindung zueinander verdrehgesichert längenvariabel ausgebildet ist.

Dazu kann das Kopplungselement zweiteilig ausgebildet sein und aus einem mit der ersten Verbindung verbundenen ersten Kopplungsteil und einem mit der zweiten Verbindung verbundenen zweiten Kopplungsteil bestehen, wobei das erste Kopplungsteil und das zweite Kopplungsteil über eine Profilverbindung koaxial relativ zueinander verschiebbar verbunden sind.

Vorzugsweise ist die erste Antriebsstrangkomponente ein Schaltgetriebe und die zweite Antriebsstrangkomponente ein Verteilergetriebe eines Kraftfahrzeugs, insbesondere eines Allradstraßenfahrzeugs.

Ein kompakter, wenig Bauraum benötigender Aufbau wird dabei dadurch erreicht, dass das Verteilergetriebe ein feststehendes Verteilergetriebegehäuse aufweist, an dem eine Bremsbetätigungseinrichtung einer Feststellbremse fest angeordnet ist, die eine auf der Hohlwelle drehfest angeordnete Bremsscheibe der Feststellbremse umgreift.

Je nach dem im Allradstraßenfahrzeug vorhandenen Bauraum kann die Bremsscheibe an dem dem Schaltgetriebe zugewandten Endbereich der Hohlwelle oder an dem dem Schaltgetriebe abgewandten Endbereich der Hohlwelle angeordnet sein.

Ist die Bremsscheibe an dem dem Schaltgetriebe abgewandten Endbereich der Hohlwelle angeordnet, so ist die Bremsscheibe zur Montage und Demontage leicht zugänglich.

Ebenfalls zu einem kompakten und wenig Bauraum benötigenden Aufbau führt es, wenn auf der Hohlwelle innerhalb des Verteilergetriebegehäuses ein Eingangsrad des Verteilergetriebes angeordnet ist.

Der erfindungsgemäße Antriebsstrang wird bevorzugt in einem gepanzerten Allradstraßenfahrzeug, z.B. einem sog. Radpanzer, verwendet. Hier besteht die Notwendigkeit, zwischen dem Ausgang der ersten Antriebsstrangkomponente, z.B. einem Schaltgetriebe, und dem Eingang einer zweiten Antriebsstrangkomponente, z.B. einem Verteilergetriebe, besonders kurze Distanzen zu realisieren.

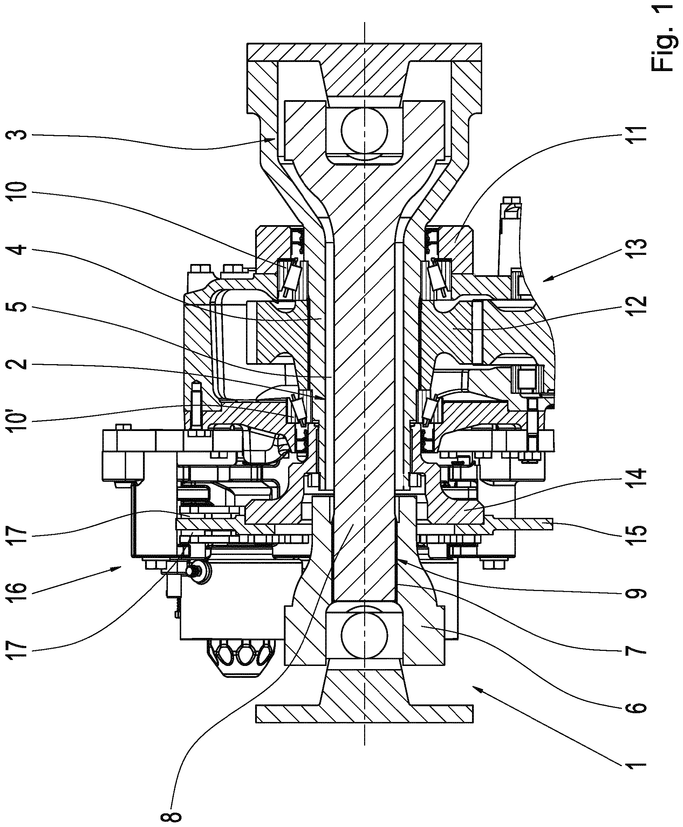

Ein Ausführungsbeispiel der Erfindung wird in der Zeichnung dargestellt und im Folgenden näher beschrieben. Die einzige Figur der Zeichnung zeigt einen Längsschnit eines Antriebsstrangs.

Der Antriebsstrang weist ein erstes Gelenk 1 an einem ersten Ende einer Gelenkwelle 2 auf, das von einem nicht dargestellten Antriebselement eines Schaltgetriebes drehbar antreibbar ist. An dem zweiten Ende der Gelenkwelle 2 ist ein zweites Gelenk 3 angeordnet, das mit einem Ende einer Hohlwelle 4 verbunden ist, durch deren Innenraum sich die Gelenkwelle 2 mit radialem Spiel 5 erstreckt.

Die Gelenkwelle 2 ist zweiteilig ausgebildet, wobei das dem Schaltgetriebe abgewandte Teil 6 des ersten Gelenks 1 mit einer koaxialen Profilöffnung 7 versehen ist, in die ein mit dem zweiten Gelenk 3 verbundenes, durch die Hohlwelle 4 ragendes Wellenteil 8 mit einem entsprechenden Außenprofil axial verschiebbar hineinragt und so eine Profilverbindung 9 herstellt.

Die Hohlwelle 4 ist mittels Wälzlagern 10, 10' drehbar in einem Verteilergetriebegehäuse 11 gelagert.

Zwischen den Wälzlagern 10, 10' ist auf der Hohlwelle 4 ein Eingangsrad 12 eines Verteilergetriebes 13 drehfest angeordnet.

Auf dem dem ersten Gelenk 1 zugewandten Endbereich der Hohlwelle 4 ist ein flanschartiges Zwischenstück 14 drehfest angeordnet, an dessen radial nach außen gerichtetem Flansch eine ringförmige Bremscheibe 15 befestigt ist. Von außen umgriffen wird die Bremsscheibe 15 von einem die Bremsbeläge tragenden Bremssattel einer Feststellbremse 16. Die Feststellbremse 16 ist fest an dem Verteilergetriebegehäuse 11 angeordnet.

### Bezugszeichen

- 1: erstes Gelenk
- 2: Gelenkwelle
- 3: zweites Gelenk
- 4: Hohlwelle
- 5: Spiel
- 6: Teil
- 7: Profilöffnung
- 8: Wellenteil
- 9: Profilverbindung
- 10: Wälzlager
- 10': Wälzlager
- 11: Verteilergetriebegehäuse
- 12: Eingangsrad
- 13: Verteilergetriebe
- 14: Zwischenstück
- 15: Bremsscheibe
- 16: Feststellbremse
- 17: Bremsbeläge

## Patentansprüche

1. Antriebsstrang für ein Allradstraßenfahrzeug mit einer ersten Antriebsstrangkomponente, die ein drehbar gelagertes Abtriebselement (4) aufweist und mit einer zweiten Antriebsstrangkomponente, die ein zum Abtriebselement (4) axiales drehbar gelagertes Antriebselement aufweist, wobei das Abtriebselement (4) durch ein Kopplungselement (2) mit dem Antriebselement drehfest verbunden ist, das Abweichungen von einer Koaxialität der Drehachsen von Abtriebselement (4) und Antriebselement erlaubt, mit einer ersten Verbindung eines ersten Endes des Kopplungselements (2) mit dem Abtriebselement (4) und einer zweiten Verbindung des zweiten Endes des Kopplungselements (2) mit dem Antriebselement (4), **dadurch gekennzeichnet, dass** das Abtriebselement (4) eine die zweite Antriebsstrangkomponente ganz oder teilweise durchragende Hohlwelle (4) ist, die in der zweiten Antriebsstrangkomponente drehbar gelagert ist und die mit radialem Spiel (5) von dem Kopplungselement (2) ganz oder teilweise durchragt ist, wobei die erste Verbindung zwischen der ersten Antriebsstrangkomponente und der zweiten Antriebsstrangkomponente und die zweite Verbindung im Bereich innerhalb der zweiten Antriebsstrangkomponente oder im Bereich außerhalb der zweiten Antriebsstrangkomponente auf deren der ersten Antriebsstrangkomponente abgewandten Seite angeordnet ist.

2. Antriebsstrang nach Anspruch 1, **dadurch gekennzeichnet, dass** das Kopplungselement (2) eine Gelenkwelle (2) ist.

3. Antriebsstrang nach Anspruch 2, **dadurch gekennzeichnet, dass** die erste Verbindung und/oder die zweite Verbindung als Kardangelenk oder als Gleichlaufgelenk oder als Bogenzahnkupplung oder als Membrankupplung oder als Gummi-Metall-Kupplung ausgebildet sind.

4. Antriebsstrang nach einem der vorhergehenden Ansprüche, **dadurch gekennzeichnet, dass** das Kopplungselement (2) zwischen der ersten Verbindung und der zweiten Verbindung zueinander verdrehgesichert längenvariabel ausgebildet ist.

5. Antriebsstrang nach Anspruch 4, **dadurch gekennzeichnet, dass** das Kopplungselement (2) zweiteilig ausgebildet ist und aus einem mit der ersten Verbindung verbundenen ersten Kopplungsteil und einem mit der zweiten Verbindung verbundenen zweiten Kopplungsteil besteht, wobei das erste Kopplungsteil und das zweite Kopplungsteil über eine Profilverbindung (9) koaxial relativ zueinander verschiebbar verbunden sind.

6. Antriebsstrang nach einem der vorhergehenden Ansprüche, **dadurch gekennzeichnet, dass** die erste Antriebsstrangkomponente ein Schaltgetriebe und die zweite Antriebsstrangkomponente ein Verteilergetriebe (13) eines Allradstraßenfahrzeugs ist.

7. Antriebsstrang nach Anspruch 6, **dadurch gekennzeichnet, dass** das Verteilergetriebe (13) ein feststehendes Verteilergetriebegehäuse (11) aufweist, an dem eine Bremsbetätigungseinrichtung einer Feststellbremse (16) fest angeordnet ist, die eine auf der Hohlwelle (4) drehfest angeordnete Bremsscheibe (15) der Feststellbremse (16) umgreift.

8. Antriebsstrang nach Anspruch 7, **dadurch gekennzeichnet, dass** die Bremsscheibe (15) an dem dem Schaltgetriebe zugewandten Endbereich der Hohlwelle (4) angeordnet ist.

9. Antriebsstrang nach Anspruch 7, **dadurch gekennzeichnet, dass** die Bremsscheibe an dem dem Schaltgetriebe abgewandten Endbereich der Hohlwelle (4) angeordnet ist.

10. Antriebsstrang nach einem der Ansprüche 6 bis 9, **dadurch gekennzeichnet, dass** auf der Hohlwelle (4) innerhalb des Verteilergetriebegehäuses (11) ein Eingangsrad (12) des Verteilergetriebes (13) angeordnet ist.

## Claims

1. Drive train for an all wheel drive road vehicle having a first drive train component which has a rotatably mounted output element (4), and having a second drive train component which has a drive element which is mounted such that it can be rotated axially with respect to the output element (4), the output element (4) being connected fixedly to the drive element so as to rotate with it by way of a coupling element (2) which permits deviations from a coaxiality of the rotational axes of the output element (4) and the drive element, having a first connection of a first end of the coupling element (2) to the output element (4), and a second connection of the second end of the coupling element (2) to the drive element (4), **characterized in that** the output element (4) is a hollow shaft (4) which penetrates the second drive train component completely or partially, is mounted rotatably in the second drive train component, and is penetrated completely or partially by the coupling element (2) with a radial play (5), the first connection being arranged between the first drive train component and the second drive train component, and the second connection being arranged in the region within the second drive train component or in the region outside the second drive train component on its side which faces away from the first drive train component.

2. Drive train according to Claim 1, **characterized in that** the coupling element (2) is an articulated shaft (2) .

3. Drive train according to Claim 2, **characterized in that** the first connection and/or the second connection are/is configured as a cardan joint or as a constant velocity joint or as a curved tooth coupling or as a diaphragm coupling or as a rubber/metal coupling.

4. Drive train according to one of the preceding claims, **characterized in that** the coupling element (2) is of variable-length configuration and such that it is secured against rotation between the first connection and the second connection with respect to one another.

5. Drive train according to Claim 4, **characterized in that** the coupling element (2) is configured in two pieces and consists of a first coupling part which is connected to the first connection and a second coupling part which is connected to the second connection, the first coupling part and the second coupling part being connected via a profile connection (9) such that they can be displaced coaxially relative to one another.

6. Drive train according to one of the preceding claims, **characterized in that** the first drive train component is a manual transmission, and the second drive train component is a transfer case (13) of an all wheel drive road vehicle.

7. Drive train according to Claim 6, **characterized in that** the transfer case (13) has a stationary transfer case housing (11), on which a brake actuating device of a parking brake (16) is arranged fixedly, which brake actuating device engages around a brake disc (15) of the parking brake (16), which brake disk (15) is arranged fixedly on the hollow shaft (4) so as to rotate with it.

8. Drive train according to Claim 7, **characterized in that** the brake disc (15) is arranged on that end region of the hollow shaft (4) which faces the manual transmission.

9. Drive train according to Claim 7, **characterized in that** the brake disc is arranged on that end region of the hollow shaft (4) which faces away from the manual transmission.

10. Drive train according to one of Claims 6 to 9, **characterized in that** an input gear (12) of the transfer case (13) is arranged on the hollow shaft (4) within the transfer case housing (11).

## Revendications

1. Chaîne cinématique destinée à un véhicule à traction intégrale, la chaîne cinématique comprenant un premier composant qui comporte un élément de sortie (4) monté de manière à pouvoir tourner et un deuxième composant qui comporte un élément d'entraînement (4) disposé axialement par rapport à l'élément de sortie et monté de manière à pouvoir tourner, l'élément de sortie (4) étant relié solidairement en rotation à l'élément d'entraînement par le biais d'un élément d'accouplement (2), ce qui permet des écarts de coaxialité entre l'axe de rotation de l'élément de sortie (4) et celui de l'élément d'entraînement, une première liaison d'une première extrémité de l'élément d'accouplement (2) avec l'élément de sortie (4) et une deuxième liaison de la deuxième extrémité de l'élément d'accouplement (2) avec l'élément d'entraînement (4), **caractérisée en ce que** l'élément de sortie (4) est un arbre creux (4) qui fait saillie totalement ou partiellement à travers le deuxième composant et qui est monté de manière à pouvoir tourner dans le deuxième composant et qui fait saillie totalement ou partiellement de l'élément d'accouplement (2) avec un jeu radial (5), la première liaison entre le premier composant et le deuxième composant et la deuxième liaison étant disposées dans la région située à l'intérieur du deuxième composant ou dans la région située à l'extérieur du deuxième composant du côté de celui-ci qui est opposé au premier composant.

2. Chaîne cinématique selon la revendication 1, **caractérisée en ce que** l'élément d'accouplement (2) est un arbre d'articulation (2).

3. Chaîne cinématique selon la revendication 2, **caractérisée en ce que** la première liaison et/ou la deuxième liaison sont conçues comme un joint universel ou comme un joint homocinétique ou comme un accouplement à denture sphérique ou comme un accouplement à membrane ou comme un accouplement caoutchouc-métal.

4. Chaîne cinématique selon l'une des revendications précédentes, **caractérisée en ce que** l'élément d'accouplement (2) entre la première liaison et la deuxième liaison est conçu de manière à avoir une longueur variable et de manière à ce qu'elles ne puissent pas tourner l'une par rapport à l'autre.

5. Chaîne cinématique selon la revendication 4, **caractérisée en ce que** l'élément d'accouplement (2) est conçu en deux parties et comprend une première partie d'accouplement reliée à la première liaison et une deuxième partie d'accouplement reliée à la deuxième liaison, la première partie d'accouplement et la deuxième partie d'accouplement étant reliées de manière à pouvoir coulisser coaxialement l'une par rapport à l'autre par le biais d'une liaison profilée (9).

6. Chaîne cinématique selon l'une des revendications précédentes, **caractérisée en ce que** le premier composant est une transmission à changement de vitesse et le deuxième composant est une boîte de transfert (13) d'un véhicule à traction intégrale.

7. Chaîne cinématique selon la revendication 6, **caractérisée en ce que** la boîte de transfert (13) comporte un boîtier fixe (11) au niveau duquel est disposé de manière fixe un dispositif d'actionnement d'un frein de stationnement (16), lequel dispositif s'engage autour d'un disque de frein (15), monté solidairement sur l'arbre creux (4), du frein de stationnement (16).

8. Chaîne cinématique selon la revendication 7, **caractérisée en ce que** le disque de frein (15) est disposé au niveau de la région d'extrémité de l'arbre creux (4) qui est tournée vers la transmission à changement de vitesse.

9. Chaîne cinématique selon la revendication 7, **caractérisée en ce que** le disque de frein est disposé au niveau de la région d'extrémité de l'arbre creux (4) qui est opposée à la transmission à changement de vitesse.

10. Chaîne cinématique selon l'une des revendications 6 à 9, **caractérisée en ce qu'**une roue d'entrée (12) de la boîte de transfert (13) est disposée sur l'arbre creux (4) à l'intérieur du boîtier (11).
